# EUROPÄISCHE PATENTANMELDUNG

(11) **EP 3 683 194 A1**
(43) Veröffentlichungstag der Anmeldung: **22.07.2020**
(21) Anmeldenummer: 19218483.6
(22) Anmeldetag: 20.12.2019
(51) Int. Cl.: C02F 11/18, C02F 11/143, C02F 1/66, B09B 3/00, C02F 11/04, C02F 103/26

(54) **VERFAHREN UND VORRICHTUNG ZUR DESINTEGRATION VON ORGANISCHEN SUBSTRATEN**

(30) Priorität: 14.01.2019 DE 102019200360
(71) Anmelder: Dünnebeil, Andreas, 14513 Teltow (DE)
(72) Erfinder: Dünnebeil, Andreas, 14513 Teltow (DE)
(74) Vertreter: Patentanwälte Ruff, Wilhelm, Beier, Dauster & Partner mbB

(57) **Zusammenfassung**

Bei einem Verfahren zur Desintegration von organischen Substraten wird dem Substrat (1) eine alkalische Lösung (3) als pH-verändernde Lösung zugesetzt und dieses dann zur Erwärmung auf eine Temperatur unterhalb von 100°C mit Dampf (4; 14) behandelt bzw. Dampf wird zugegeben. Unter drucklosen Bedingungen wird das erwärmte und mit alkalischer Lösung versetzte Substrat einer Verweilzeit unterzogen. Vorzugsweise handelt es sich bei den organischen Substraten um Schlämme aus Abwasserbehandlungsanlagen.

## Beschreibung

### Anwendungsgebiet und Stand der Technik

Die vorliegende Erfindung betrifft ein Verfahren zur Desintegration von organischen Substraten, insbesondere von organischen Schlämmen aus der Abwasserbehandlung, aber auch Substraten für Biogasanlagen, und eine Vorrichtung zur Durchführung dieses Verfahrens.

Bei der Reinigung von Abwässern fallen durch Sedimentation oder Eindickung Klärschlämme als Mischung aus organischen und anorganischen Fest- und Flüssigstoffen an. Diese Klärschlämme werden in der Regel einer Schlammfaulung unterzogen, wodurch die Klärschlämme stabilisiert werden und die Schlammtrockenmasse reduziert wird. Um die anaeroben Prozesse bei der Faulung zu unterstützen, ist eine gezielte Vorbehandlung der Klärschlämme hilfreich. In diesem Zusammenhang sind thermische Desintegrationsverfahren bekannt, wobei insbesondere die in den Klärschlämmen vorhandenen Mikroorganismen aufgeschlossen werden sollen, um sie einem weiteren Abbau besser zugänglich zu machen.

Auf Kläranlagen werden verschiedene Verfahren zur Desintegration von Schlämmen eingesetzt. Verschiedene Ziele werden dabei verfolgt. Insbesondere soll die resultierende Schlammmenge reduziert und die Gasproduktion in der Faulung erhöht werden, Wertstoffe sollen gewonnen werden und weiterhin sollen Polymere bei der Entwässerung eingespart werden. Am Markt üblich sind im Wesentlichen die mechanischen Verfahren, oftmals auf der Basis von Ultraschall, die hochthermischen Verfahren über 100°C und die thermisch-chemischen Desintegrationsverfahren.

Aus der WO 2014/123426 A1 ist ein Verfahren bekannt, bei dem organisches Material bei hohem Druck thermisch vorbehandelt wird. In einem Vorheizschritt wird das organische Material in einem Vorheiztank mit Wasserdampf erwärmt. Das erwärmte Material wird in einen nachgeschalteten Hydrolysereaktor überführt. Über eine weitere Dampfzufuhr in den Hydrolysereaktor wird der Druck bis zu einem gewünschten Hydrolysedruck, z.B. zwischen 3 und 16 bar, erhöht und für eine bestimmte Zeit gehalten. Anschließend wird das unter Druck stehende Material in einen nachgeschalteten Druckreduktionstank überführt. Andere Verfahren arbeiten mit Wärmetauschern. So beschreibt die EP 2 891 633 A1 eine Vorrichtung zur thermischen Hydrolyse von organischer Masse mit einem Heizelement und einem Kühlelement als Wärmetauscher, in denen Wärme zwischen der organischen Masse und einem von der organischen Masse getrennten Medium getauscht wird.

Derartige Anlagen können erhebliche Nachteile mit sich bringen. Insbesondere ist die Anlagentechnologie bedingt durch den erforderlichen Überdruck von teilweise bis zu 10 bar oder mehr technisch aufwendig und bedarf einer intensiven Wartung. Durch die Druckbehälter sind regelmäßige technische Überwachungen erforderlich. Durch die hohen Temperaturen von beispielsweise 130°C bis 180°C ist die Gefahr von Inkrustationen relativ hoch ist. Bei den hohen Temperaturen werden die Bestandteile der Schlammsubstrate weitestgehend zerlegt und teilweise in neue Substanzen überführt. Ein weiterer Nachteil ist der verhältnismäßig hohe Energieaufwand. Zwar wird versucht, einen Teil der Energie über sogenannte *Flash*-Entspanner wieder für den Zulauf zurückzugewinnen. Dieses ist aber unter atmosphärischen Bedingungen nur für den Temperaturbereich oberhalb von 100°C möglich. Weiterhin ist in der Regel eine aufwendige Rückkühlung der auf hohe Temperaturen erhitzten Klärschlämme vor der Faulung erforderlich.

Weiterhin ist bei derartigen Anlagen die teilweise sehr hohe CSB-Rückbelastung (CSB - chemischer Sauerstoffbedarf) für die Kläranlage aus den Zentraten, also dem bei der Schlammentwässerung anfallenden Schlammwasser, ein großes Problem. Der CSB wird normalerweise in der Belebung der Kläranlage durch die dort vorhandenen Mikroorganismen weitestgehend abgebaut. Allerdings entsteht bei den hohen Temperaturen in diesen Anlagen auch ein oft sehr hoher Anteil an inertem CSB, der in der Belebung nicht abgebaut wird, sondern letztlich sogar in den Ablauf der Kläranlage gelangen kann. Der zusätzliche Energiebedarf durch die höhere Belüftungsrate ist ebenfalls nachteilig.

Die DE 103 47 476 A1 beschreibt ein Verfahren und eine Vorrichtung zum Zellaufschluss in Schlämmen, wobei dem Schlamm eine geringe Menge einer Lauge zugesetzt wird und die entstehende Schlammmischung in einem Reaktor drucklos bei einer Temperatur unterhalb des Siedepunktes von Wasser behandelt wird. Für diese thermisch-chemische Desintegration wird ein Wärmetauscher für die Aufheizung der Substrate benötigt. Dies ist nachteilig, da der Wärmetauscher eine gelegentliche Reinigung erfordert. Weiterhin sind gerade bei größeren Anlagen und bei Substraten mit verhältnismäßig hohen Feststoffanteilen aufgrund der hohen Viskosität überproportional große Wärmetauscherflächen erforderlich.

### Aufgabe und Lösung

Der Erfindung liegt die Aufgabe zugrunde, ein eingangs genanntes Verfahren sowie eine eingangs genannte Vorrichtung zu schaffen, mit denen Probleme des Standes der Technik gelöst werden können und es insbesondere möglich ist, eine thermisch-chemische Desintegration von organischen Substraten zu erreichen, insbesondere von organischen Schlämmen in Abwasseraufbereitungsanlagen, um die geschilderten Nachteile zu vermeiden.

Gelöst wird diese Aufgabe durch ein Verfahren mit den Merkmalen des Anspruchs 1 sowie durch eine Vorrichtung mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für die Vorrichtung beschrieben. Sie sollen jedoch unabhängig davon sowohl für das Verfahren als auch für die Vorrichtung selbstständig und unabhängig voneinander gelten können. Der Wortlaut der Ansprüche wird durch ausdrückliche Bezugnahme zum Inhalt der Beschreibung gemacht.

Kern der Erfindung ist ein Verfahren zur Desintegration von organischen Substraten, wobei das Substrat zur Erwärmung auf eine Temperatur unterhalb von 100°C mit Dampf behandelt wird bzw. mittels des Dampfes auf eine solche Temperatur gebracht wird. Das erwärmte Substrat wird unter drucklosen Bedingungen einer Verweilzeit unterzogen. Bei den organischen Substraten handelt es sich insbesondere um organische Schlämme aus Abwasserbehandlungsanlagen (Kläranlagen). Prinzipiell können jedoch auch andere Substrate diesem Verfahren unterzogen werden, beispielsweise Restprodukte aus der Landwirtschaft oder Abfälle aus der industriellen Nahrungsmittelproduktion, die beispielsweise als Substrate in Biogasanlagen verwertet werden sollen.

Unter dem Begriff "Desintegration" wird hierbei der Aufschluss von partikulären Bestandteilen in organischen Substraten verstanden, insbesondere der Aufschluss vom Mikroorganismen oder allgemein der Aufschluss von zellulären Bestandteilen wie z.B. Bakterien, Pilze oder Protozoen. Häufig wird für diesen Vorgang auch der Begriff "Hydrolyse" verwandt. Der Begriff "organisches Substrat" oder "Substrat" umfasst Substrate, die organische Bestandteile und insbesondere Mikroorganismen enthalten oder enthalten können. Unter dem Begriff "organische Schlämme" oder "Schlämme" werden Schlämme mit organischen Bestandteilen verstanden, also eine Suspension, die mehr oder weniger eingedickt sein kann, und die zumindest teilweise auch organische Bestandteile enthält, wie z. B. Mikroorganismen. Insbesondere umfassen die organischen Schlämme Klärschlämme, die bei der Abwasserbehandlung in Kläranlagen anfallen. Unter dem Begriff "Verweilzeit" ist die Zeitspanne zu verstehen, innerhalb derer das mittels Dampf erwärmte Substrat gewissermaßen inkubiert wird, sodass die Prozesse stattfinden können, die zu eine Desintegration der partikulären Bestandteile führen.

Unter den Bedingungen des vorgeschlagenen Verfahrens findet eine thermisch-chemische Desintegration des Substrats statt, wobei insbesondere die in dem Substrat enthaltenen Mikroorganismen aufgeschlossen werden, sodass nachfolgende Prozesse bei der Weiterbehandlung des Substrats, insbesondere bei einer Faulung, in verbesserter Weise ablaufen können. Mit besonderem Vorteil kann dieses Verfahren für eine Desintegration von Überschussschlamm aus Abwasserbehandlungsanlagen bzw. Kläranlagen eingesetzt werden. Wesentlicher Unterschied zu bisherigen Verfahren mit gleicher Zielsetzung ist der Einsatz einer Dampfbehandlung, insbesondere in Form von Dampfeinmischung oder Dampfinjektionen, bei drucklosen Anlagen mit einer Prozesstemperatur unter 100°C, beispielsweise zwischen 40°C und 95°C. Damit werden aufwendige und wartungsintensive Wärmetauscher vermieden und es können auch hochviskose Substrate mit deutlich höheren Feststoffgehalten als bei herkömmlichen Verfahren direkt verarbeitet werden. Eine Flash-Verdampfung nach dem Prozess ist aufgrund der Temperatur unterhalb von 100°C nicht erforderlich.

Vorteilhaft wird dem Substrat eine pH-verändernde Lösung, vorteilhaft eine alkalische Lösung, zugesetzt. Alternativ kann es eine Säure sein. Beides wird nachfolgend noch näher erläutert. Die Verweilzeit ist dann die Zeit, während das mittels Dampf erwärmte und mit der pH-verändernden Lösung versetzte Substrat inkubiert wird.

Bei dem Schlamm handelt es sich vorzugsweise um einen Schlamm mit einem Feststoffgehalt zwischen 2% bis 20%, insbesondere zwischen 4% bis 16%, vorzugsweise zwischen 6% bis 12%. Beispielsweise ist der Schlamm ein Überschussschlamm aus einer Abwasserbehandlungsanlage, insbesondere ein eingedickter Überschussschlamm. Unter einem Überschussschlamm ist dabei im Allgemeinen ein Schlamm zu verstehen, der bei der Nachklärung in einer biologischen Behandlungsstufe in Abwasserbehandlungsanlagen anfällt und dem System als überschüssige Biomasse entnommen wird. Bei einem Schlamm mit einem derartigen Feststoffgehalt handelt es sich um ein hochviskoses Substrat. Der besondere Vorteil des vorgeschlagenen Verfahrens ist, dass auch solche hochviskosen Substrate behandelt werden können. Dies ist insbesondere durch die vorgesehene Dampfbehandlung möglich. Ein besonderer Vorteil des vorgeschlagenen Verfahrens liegt also auch darin, dass die Schlämme weiter eingedickt werden können als beispielsweise bei herkömmlichen Anlagen, die mit Wärmetauschern arbeiten. Daher kann in nachfolgenden Verfahrensschritten, beispielsweise bei der Faulung, Volumen eingespart werden.

Bei der pH-verändernden Lösung handelt es sich im Fall einer alkalischen Lösung vorzugsweise um Natronlauge, insbesondere um 50%ige Natronlauge. Natronlauge ist besonders bevorzugt, da sie sehr kostengünstig ist und sich in Versuchen zur Erfindung als sehr effektiv erwiesen hat. In bevorzugten Ausgestaltungen des vorgeschlagenen Verfahrens können 1 bis 5 I Natronlauge/m³ Substrat, insbesondere 1,5 I Natronlauge/m³ Substrat, zugesetzt werden. Es handelt sich also um verhältnismäßig geringe Mengen von Natronlauge. Durch die Zugabe der alkalischen Lösung wird der pH-Wert des Substrats verändert und insbesondere erhöht. Vorteilhafterweise liegt der pH-Wert des Substrats direkt nach der Zugabe der alkalischen Lösung etwa in einem Bereich zwischen pH 8 - 12. Besonders bevorzugt ist ein Bereich zwischen pH 10 - 11. Im Verlauf der Verweilzeit, also während der ablaufenden thermisch-chemischen Desintegration des Substrats, neutralisiert sich der pH-Wert des Substrats wieder weitgehend. Für die Zugabe der Natronlauge oder allgemein der alkalischen Lösung können an sich bekannte Dosiereinrichtungen verwendet werden, wobei die Dosierung der alkalischen Lösung vorzugsweise vor der Dampfbehandlung bzw. der Dampfeinmischung oder Dampfinjektion erfolgt. Prinzipiell kann die Dosierung der alkalischen Lösung aber auch während oder nach der Dampfbehandlung bzw. Dampfeinmischung oder Dampfinjektion erfolgen.

Alternativ kann als pH-verändernde Lösung auch eine Säure zugegeben werden, wodurch der pH-Wert entsprechend gesenkt wird. Dabei kann ein pH-Wert von pH 2 - 6 eingestellt werden, vorteilhaft zwischen pH 3 - 4. Es kann beispielsweise Salpeter- oder Schwefelsäure sein. Das könnte für nachfolgende Schritte, bei denen es um eine Phosphorrückgewinnung gehen kann, von Vorteil sein. Dabei sinkt der pH-Wert dann zwar stark, gleichzeitig erhöht sich damit aber auch der Anteil an gelöstem Phosphat.

Für die Erwärmung bzw. Behandlung mit Dampf wird zweckmäßigerweise Wasserdampf vorzugsweise als Sattdampf, also als gesättigter Dampf, verwendet. Vorteilhafterweise kann Niederdruck-Sattdampf eingesetzt werden. Die Dampferzeugung, für die üblicherweise frisches Speisewasser eingesetzt wird, kann beispielsweise in Dampfkesseln erfolgen. Weiterhin ist es möglich, dass zumindest ein Teil des erforderlichen Dampfes im Abhitzekessel der Rauchgase eines meist vorhandenen Blockheizkraftwerks erzeugt wird und für das vorgeschlagene Verfahren eingesetzt wird. Die Behandlung des Substrats mit dem Dampf erfolgt zweckmäßigerweise über eine Dampfinjektion, es ist aber auch eine Dampfeinmischung z.B. mit Unterstützung eines Rührers oder Mischers denkbar.

Durch die Dampfbehandlung wird das Substrat insbesondere auf eine Temperatur zwischen 40°C und 95°C erwärmt. Besonders bevorzugt ist eine Temperatur zwischen 60°C und 75°C, insbesondere zwischen 65°C und 75°C, insbesondere zwischen 70°C und 75°C, vorzugsweise 72°C. Vorteilhafterweise wird die vorgesehene Temperatur während der vorgesehenen Verweilzeit des Substrats gehalten. Dies kann gegebenenfalls durch Nachheizen bzw. Nacherwärmen oder durch andere Maßnahmen erfolgen bzw. unterstützt werden.

Die Verweilzeit, also gewissermaßen die Inkubationszeit für die thermische oder die thermisch-chemische Desintegration, kann etwa 0,2 h bis 3 h betragen, vorteilhaft 0,5 h bis 2 h. Die geeignete Zeitdauer, mit der eine ausreichende Desintegration erreicht wird, ist insbesondere auch von der Temperatur des erwärmten Substrats abhängig. Umso höher die Temperatur ist, umso kürzer kann die Verweilzeit sein. Beispielsweise kann bei einer Temperatur zwischen 70°C bis 75°C eine Verweilzeit von 0,5 h bis 1 h ausreichend sein, wohingegen bei einer Temperatur von 65°C eine Verweilzeit von 1,5 h bis 2 h vorgesehen sein kann. In einer besonders bevorzugten Ausgestaltung des vorgeschlagenen Verfahrens werden mit diesem Verfahren die gegebenenfalls vorhandenen gesetzlichen Anforderungen für eine Hygienisierung der Substrate erfüllt, wobei eine gesetzlich vorgeschriebene Hygienisierung in der Regel eine Wärmebehandlung bei mindestens 70°C für 1 h oder für 30 min vorsieht.

Diese Inkubation wird zweckmäßigerweise in einem oder mehreren dafür vorgesehenen Verweilbehältern durchgeführt. Vorzugsweise ist während der Verweilzeit eine Durchmischung des Substrats erfolgt bzw. vorgesehen ist. Hierfür können strömungsführende Einrichtungen oder Rühreinrichtungen in dem oder den Verweilbehältern vorgesehen sein. Eine Durchmischung gewährleistet eine gleichmäßige Temperierung innerhalb des Substrats während der Inkubation und vermeidet Kältenester. Das gilt bei einer Anwendung als Hygienisierung in einem sogenannten Batchprozess. Bei einem klassischen Verfahren, bei dem nicht hygienisiert wird, wird eine Art Pfropfenströmung bevorzugt, damit alle Teile des Schlamms eine gleichmäßig hohe Verweilzeit haben. Für eine solche Pfropfenströmung kann eine Kaskadierung implementiert werden.

Für die Durchführung des Desintegration wird das Substrat, das vorteilhaft mit der alkalischen Lösung versetzt ist, das gegebenenfalls bereits durch eine Dampfbehandlung erwärmt ist, in den oder die Verweilbehälter überführt, wo die Inkubation zum Ablaufen des desintegrativen Prozesses während der vorgesehenen Verweilzeit erfolgt. Die Dampfbehandlung kann dabei bereits im Zulauf der Anlage erfolgen, beispielsweise durch eine Dampfinjektion, sodass das zu behandelnde Substrat bereits aufgeheizt bzw. erwärmt in den Verweilbehälter gelangt. Alternativ oder zusätzlich kann es vorgesehen sein, dass die Dampfbehandlung, z.B. die Dampfinjektion, in dem Verweilbehälter erfolgt. Weiterhin ist es möglich, dass die Dampfbehandlung im Zuge einer Zirkulation des Substrats zwischen dem Verweilbehälter und einer vorgeschalteten Dampfbehandlungsstelle erfolgt, z.B. Mündung einer Dampfinjektionseinrichtung, wobei hierfür in der Regel eine geeignete Zirkulationspumpe erforderlich ist. Wenn beispielsweise mehrere Verweilbehälter in Reihe geschaltet sind, kann eine solche Zirkulation beispielsweise nur für den ersten Verweilbehälter dieser Reihe vorgesehen sein. Die Erwärmung des Substrats kann weiterhin durch eine Kombination dieser verschiedenen Möglichkeiten erfolgen.

Das vorgeschlagene Verfahren kann im Batch-Betrieb durchgeführt werden. Die Durchführung in einen Batch-Betrieb hat den besonderen Vorteil, dass dabei die Bedingungen für eine Hygienisierung des Substrats, insbesondere mindestens 70°C für 1 h, bei geeigneter Prozessführung in nachprüfbarer Weise realisiert werden können.

Vorzugsweise wird das Substrat bei einer Hygienisierung für die Verweilzeit in zwei oder mehr Verweilbehälter, vorzugsweise in drei Verweilbehälter, überführt, wobei die zwei oder mehr Verweilbehälter wechselseitig mit dem Substrat beschickt werden können. Besonders bevorzugt ist eine Ausgestaltung mit drei Verweilbehältern, die wechselseitig beschickt werden können. Hierbei wird innerhalb eines Zyklus ein erster Verweilbehälter befüllt und gegebenenfalls beheizt, in einem zweiten Verweilbehälter wird die Temperatur für Desintegration/Hygienisierung für die Zeitdauer der Verweilzeit gehalten und in einem dritten Verweilbehälter wird das behandelte Substrat abgelassen. Hierdurch lässt sich eine quasi-kontinuierliche Prozessführung realisieren, bei der auch eine gegebenenfalls gesetzlich vorgeschriebene Hygienisierung erreicht werden kann. Das Substrat, das vorteilhaft mit der pH-verändernden Lösung versetzt ist, wird dabei wechselseitig auf mehrere Verweilbehälter verteilt. Bewährt haben sich hier Dreibehälteranlagen mit einer Mindest-Zykluszeit, wie sie für die Hygienisierung erforderlich ist. Typische Parameter sind Zykluszeiten von mindestens 60 Minuten bei Temperaturen knapp oberhalb von 70°C, beispielsweise 75°C. Vorteilhaft sind Temperaturen oberhalb von 70°C für 30 Minuten, die genannten 60 Minuten sind eher nur in der EU üblich und Ländern, die die EU-Vorschriften übernommen haben.

In einer bevorzugten Ausgestaltung des vorgeschlagenen Verfahrens wird vor der Behandlung des Substrats mit Dampf eine Vorerwärmung des Substrats durch den Rückfluss eines bereits erwärmten Substratvolumens durchgeführt. Das zufließende Substrat kann also durch das abfließende Substrat zumindest teilweise vorgeheizt werden. Hierdurch kann eine entsprechende Anlage besonders effizient betrieben und die Menge des benötigten Dampfs reduziert werden.

Um die Temperatur des erwärmten Substrats während der Verweilzeit möglichst konstant zu halten, kann während der Verweilzeit eine Nacherwärmung des Substrats vorgesehen sein. Wenn beispielsweise eine Dampfinjektion direkt in den Verweilbehälter erfolgt bzw. vorgesehen ist, kann eine erneute Dampfinjektion vorgenommen werden. Wenn die Dampfbehandlung bzw. eine Dampfinjektion dem Verweilbehälter vorgeschaltet ist, kann eine Zirkulierung von bereits erwärmtem Substrat aus dem Verweilbehälter zurück zu einer Dampfinjektionsstelle vorgesehen sein.

Nach der Verweilzeit kann das behandelte Substrat einer Faulung unterzogen werden. Die Kombination des vorgeschlagenen Verfahrens mit einer Faulung hat den besonderen Vorteil, dass durch das vorgeschlagene Verfahren eine Vorbereitung (Hydrolyse) der Substrate erfolgt, die nachfolgende Prozesse in einer Faulung erleichtern und verbessern.

In bevorzugten Ausgestaltungen des vorgeschlagenen Verfahrens kann nach der Verweilzeit eine zumindest teilweise Kühlung des behandelten Substrats vorgesehen sein. Das abfließende Substrat kann also zumindest teilweise gekühlt werden. Eine Kühlung kann beispielsweise mithilfe eines Kühlmediums erfolgen, wobei das dabei aufgewärmte Kühlmedium zum Beheizen anderer Prozesse genutzt werden kann. Weiterhin kann eine Kühlung beispielsweise mit einem Kläranlagenablauf erfolgen. Eine Kühlung kann insbesondere dann sinnvoll sein, wenn nachfolgend beispielsweise eine mesophile Faulung des Substrats erfolgt bzw. vorgesehen ist, wobei hierfür die Temperatur des Substrats aus der Inkubation für die thermisch-chemische Desintegration zu hoch wäre. Im Fall der Behandlung von Schlämmen in Kläranlagen kann das Substrat bzw. der Schlamm beispielsweise mit kaltem Primärschlamm aus der mechanischen Abwasserreinigungsstufe versetzt werden, um so eine Abkühlung zu erzielen.

In das vorgeschlagene Verfahren können auch weitere Zusatzsubstrate einbezogen werden, die im Rahmen des gesamten Prozesses ebenfalls verwertet werden sollen und/oder einer Hygienisierung unterzogen werden sollen. Als Zusatzsubstrate können beispielsweise verschiedene verwertbare Produkte der Abfallwirtschaft, wie beispielsweise Schlachtabfälle, pflanzliche Extraktionsprodukte, Lebensmittelreste oder ähnliches verwertet werden. Je nach der Natur dieser Zusatzsubstrate kann entschieden werden, ob die Zusatzsubstrate den Temperaturbedingungen des vorgeschlagenen Verfahrens mit oder ohne Zusatz der alkalischen Lösung ausgesetzt werden sollen, sodass die Einspeisung der Zusatzsubstrate an entsprechender Stelle in der Anlage erfolgen kann.

Die Erfindung umfasst weiterhin eine Vorrichtung zur Durchführung des beschriebenen Verfahrens. Die Vorrichtung umfasst wenigstens eine Einrichtung zur Behandlung des Substrats mit Dampf, also zur Erwärmung. Vorteilhaft umfasst die Vorrichtung auch wenigstens eine Dosiereinrichtung für eine pH-verändernde Lösung bzw. alkalische Lösung. Weiterhin ist wenigstens ein Verweilbehälter vorgesehen, der für eine Verweilzeit des mit Dampf behandelten Substrats erfolgt bzw. vorgesehen ist, das vorteilhaft mit alkalischer Lösung versetzt ist. In besonders bevorzugter Weise sind drei Verweilbehälter vorgesehen, vorzugsweise im Falle einer zusätzlichen Hygienisierung, die wechselseitig mit Substrat beschickbar sind. Hierdurch lässt sich eine quasi-kontinuierliche Prozessführung realisieren. Vorzugsweise ist für die Behandlung des Substrats mit Dampf wenigstens eine Dampfinjektionseinrichtung oder andere Dampfeinmischung vorgesehen, die in einen Zulauf des Verweilbehälters (oder der Verweilbehälter) und/oder direkt in den wenigstens einen Verweilbehälter mündet. Wenn eine Dampfinjektionseinrichtung mit einer Mündungsstelle des Dampfs außerhalb des oder der Verweilbehälter erfolgt bzw. vorgesehen ist, kann wenigstens eine Pumpe für eine zirkulierende Rückführung von Substrat aus dem Verweilbehälter oder, im Fall von mehreren Verweilbehältern, aus einem oder mehreren der Verweilbehälter zur Mündungsstelle der Dampfinjektionseinrichtung(en) vorgesehen sein, um eine Nacherwärmung des Substrats in dem Verweilbehälter zu ermöglichen. Bezüglich weiterer Merkmale der Vorrichtung wird auf die obige Beschreibung zum Verfahren verwiesen.

Bei der Vorrichtung kann es sich insbesondere um eine Anlage zur anschließenden Faulung von Schlämmen aus der Abwasserbehandlung handeln. Eine solche Anlage kann beispielsweise bei einer Temperatur von ca. 60°C bis 70°C drucklos betrieben werden. Durch das niedrigere Temperaturniveau werden im Vergleich mit Hochtemperatur-Anlagen geringere Anteile von inertem CSB-Mengen erzeugt. Um ähnliche Effekte wie bei den HochtemperaturVerfahren, bezogen auf zusätzliche Gasproduktion und Reduktion der Feststoffmenge, zu erreichen, hat sich die Zugabe von geringen Mengen alkalischer Lösung in Versuchen bewährt. Die vorgeschlagene Anlage kann insbesondere für die Verarbeitung von Überschussschlamm einer Kläranlage eingesetzt werden. Nach der Desintegration des mit alkalischer Lösung versetzten und erwärmten Schlamms kann nach der Verweilzeit das warme Substrat mit dem verbleibenden, kalten Primärschlamm auf die für die nachfolgende Faulung ideale Temperatur gekühlt werden. In anderen Ausgestaltungen kann auch der Primärschlamm der Desintegration gemäß dem vorgeschlagenen Verfahren unterzogen werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein. In den Zeichnungen zeigen:
- Fig. 1: ein Blockdiagramm zur Illustrierung einer ersten Ausführungsform des vorgeschlagenen Verfahrens;
- Fig. 2: ein Blockdiagramm zur Illustrierung einer weiteren Ausführungsform des vorgeschlagenen Verfahrens;
- Fig. 3: ein Blockdiagramm zur Illustrierung einer weiteren Ausführungsform des vorgeschlagenen Verfahrens;
- Fig. 4: eine schematische Darstellung einer Anlage zur Durchführung einer ersten Ausführungsform des vorgeschlagenen Verfahrens und
- Fig. 5: eine schematische Darstellung einer Anlage zur Durchführung einer weiteren Ausführungsform des vorgeschlagenen Verfahrens.

### Beschreibung der Ausführungsbeispiele

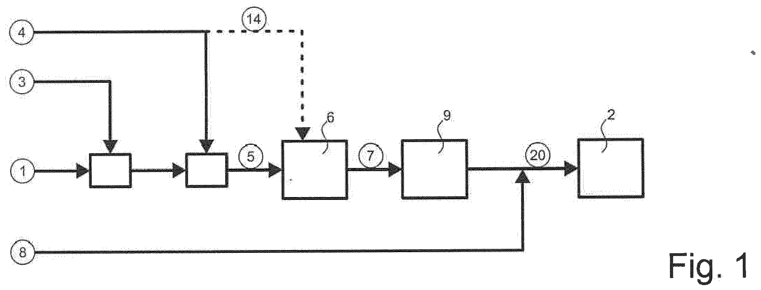

**Fig. 1** zeigt ein Blockdiagramm zur Illustrierung einer beispielhaften Ausgestaltung des vorgeschlagenen Verfahrens. Das Verfahren wird in diesem Beispiel zur Desintegration von eingedicktem Überschussschlamm 1 eingesetzt, wobei der Überschlussschlamm 1 beispielsweise auf einen Feststoffgehalt von 4% bis 8% oder bis zu 16% eingedickt sein kann, um entsprechendes Volumen in der nachfolgenden Faulung 2 einzusparen. Der eingedickte Überschussschlamm 1 wird hier mit einer alkalischen Lösung (Lauge) 3 als pH-verändernde Lösung versetzt, vorzugsweise 50%iger Natronlauge. Je nach organischem Anteil im Überschussschlamm ist dafür eine Menge von 1 bis 5 l/m³ Schlamm, meist ca. 1,5 l/m³, erforderlich. Dieses hängt vom gewünschten Aufschlussgrad ab, und wird zweckmäßigerweise für den jeweiligen Schlamm explizit ermittelt. Üblich ist ein Aufschlussgrad von ca. 40% - 50% bezogen auf den chemischen Sauerstoffbedarf. Die Zugabe der alkalischen Lösung oder einer pH-verändernden Lösung allgemein ist zwar vorteilhaft, aber nicht zwingend. Auch ohne eine pH-verändernde Lösung wird allein durch die Temperaturerhöhung eine Desintegration bewirkt, wenn auch zugegebenermaßen nur im geringeren Umfang.

Anschließend wird der Schlamm quasi drucklos mit Sattdampf 4 auf eine Temperatur von etwa 65°C aufgewärmt. Es wird bevorzugt Sattdampf eingesetzt, da dieser besser als überhitzter Dampf im Substrat bzw. Schlamm kondensiert und damit seine Wärme abgibt. Hat man beispielsweise einen auf 15% Feststoff eingedickten Überschussschlamm mit einem Volumenstrom von 10 m³/h bei einer Temperatur von 15°C, ist dafür eine Dampfmenge von ca. 0,9 to erforderlich. Die Feststoffkonzentration reduziert sich durch die eingebrachte Wassermenge auf ca. 13,8%. Anschließend unterliegt der erwärmte und mit Natronlauge versetzte Schlamm 5 in einem Verweilbehälter 6 einer Verweilzeit von 1,5 bis 2 Stunden. Alternativ oder zusätzlich zu einer Einbringung des Dampfs 4 stromaufwärts des Verweilbehälters 6, also im Zulauf, kann es auch vorgesehen sein, dass Dampf 14 direkt in den Verweilbehälter 6 eingegeben wird. Der Verweilbehälter 6 ist vorzugsweise so gestaltet, dass es zu einer geringen Durchmischung aber nicht zu Kurzschlussströmungen kommen kann. Auf diese Weise wird erreicht, dass alle Partikel des Schlamms 5 die Verweilzeit effektiv durchlaufen. Um dieses Ziel zu erreichen, kann der Verweilbehälter 6 beispielsweise mit strömungsführenden Einbauten versehen werden. Nach der Verweilzeit innerhalb des Verweilbehälters 6 wird der desintegrierte, warme Überschussschlamm 7 mit kaltem Primärschlamm 8 oder einem anderen nicht behandeltem Substrat durchmischt. Gegebenenfalls kann vorab eine weitere Kühlung 9 vorgesehen sein, die aber in der Regel nicht unbedingt erforderlich ist. Das Gemisch 20 aus kaltem Primärschlamm und desintegriertem Überschussschlamm weist üblicherweise eine Temperatur unterhalb oder in Höhe der Faulraumtemperatur auf, so dass die gesamte Wärmeenergie, die über den Dampf 3 in das System eingespeist wird, in der Faulung 2 genutzt werden kann.

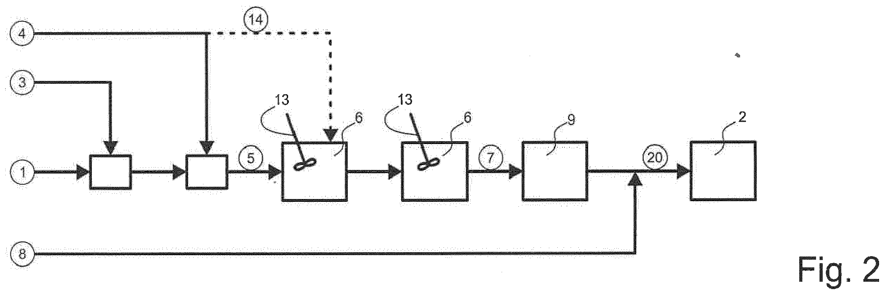

**Fig. 2** illustriert eine weitere Möglichkeit zur Durchführung des vorgeschlagenen Verfahrens, wobei das gezeigte Verfahren in weiten Teilen mit dem in Fig. 1 gezeigten Verfahren vergleichbar ist und mit den gleichen Bezugszeichen versehen ist. Im Unterschied zu dem Verfahren gemäß Fig. 1 sind für das Verfahren gemäß Fig. 2 zwei (oder mehr) Verweilbehälter 6 vorgesehen, die als Kaskade hintereinander geschaltet sind. Hierdurch können effektiv Kurzschlussströmungen minimieren werden. Insbesondere bei hohen oder sehr hohen Feststoffkonzentrationen kann es weiterhin von Vorteil sein, die Verweilbehälter 6 mit Rührwerken 13 zu versehen, um Absetzungen zu verhindern.

Um die Einhaltung von gesetzlichen Anforderungen an eine Hygienisierung (Verordnung (EG) Nr. 1069/2009 des Europäischen Parlaments und des Rates vom 21. Oktober 2009; EPA/625/R-92/013, Dezember 1992) zu erreichen bzw. nachweisen zu können, ist ein Batchprozess mit einer Mindesttemperatur über die gesamte Haltezeit (Verweilzeit) in einem abgeschlossenen Bereich erforderlich. Nach den gesetzlichen Anforderungen muss dafür über die Verweilzeit eine Temperatur mindestens 70°C eingehalten werden, nach (EG) Nr. 1069/2009 für mindestens 60 Minuten, nach EPA/625/R-92/013 für mindestens 30 Minuten. Beide Anforderungen lassen sich ohne weiteres in das vorgeschlagene Verfahren integrieren, insbesondere in einer Ausgestaltung des Verfahrens, bei der Primärschlamm 8 mit in die Desintegration gegeben wird. Die Bedingungen, die gemäß dem vorgeschlagenen Verfahren für die Desintegration des organischen Substrats eingesetzt werden, erfüllen dabei gleichzeitig die Bedingungen für eine Hygienisierung, bei der gegebenenfalls vorhandene Keime in dem Substrat inaktiviert werden.

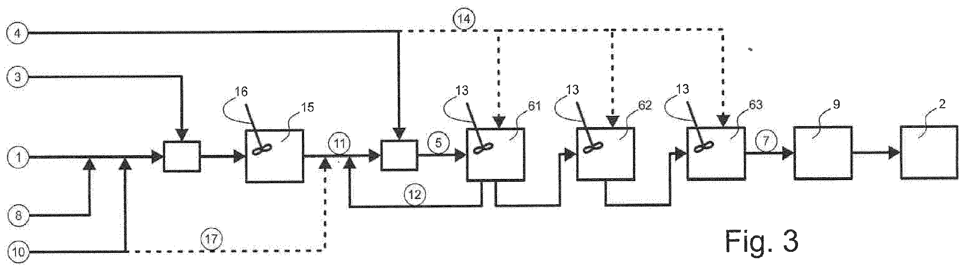

Eine solche Ausgestaltung des Verfahrens ist in **Fig. 3** illustriert. Bei dieser Ausgestaltung des Verfahrens werden alle Substrate, die letztlich in die Faulung 2 gelangen, gemäß dem vorgeschlagenen Verfahren desintegriert und dabei hygienisiert, sodass gegebenenfalls vorhandene gesetzliche Anforderungen an die Hygienisierung bei den Substraten erfüllt werden. Bei dieser Ausgestaltung werden sowohl der Primärschlamm 8 als auch der Überschussschlamm 1 gemeinsam behandelt. Das Substratgemisch aus Überschussschlamm 1, Primärschlamm 8 und gegebenenfalls Zusatzsubstraten 10 wird in gleicher Weise wie vorher beschrieben mit alkalischer Lösung als pH-verändernde Lösung (z.B. 50%ige Natronlauge) als Lauge 3 versetzt, d.h. ca. 1 bis 5 l/m³ Substrat. Alternativ zu Lauge kann auch eine Säure zugesetzt werden wie oben beschrieben. Für die Durchmischung und Einwirkung der Natronlauge 3 kann ein separater Zwischenbehälter 15 mit Rührwerk 16 vorgesehen sein. Das mit Natronlauge 3 versetzte Substratgemisch 11 wird nun mit Dampf 4 so erwärmt, dass die Hygienisierungstemperatur für die erforderliche Zeit von mindestens 60 bzw. 30 Minuten gehalten wird. Üblicherweise liegt die Temperatur ein wenig, z.B. ca. 2 K, oberhalb der Hygienisierungstemperatur, um die Wärmeverluste während der Hygienisierungszeit (Verweilzeit) zu kompensieren, d.h. die Substrate werden auf 72°C erwärmt. Sollten weitere Zusatzsubstrate 10, die ebenfalls gemäß den gesetzlichen Bestimmungen hygienisiert werden müssen, in die Faulung 2 gefördert werden, so sind auch diese mit zu erwärmen. Es liegt in der Natur der Zusatzsubstrate, ob eine Versetzung mit Natronlauge 3 sinnvoll erscheint. Sind beispielsweise keine zellulären Anteile in den Zusatzsubstraten 10 vorhanden, ist ein Aufschluss gegebenenfalls nicht sinnvoll bzw. nicht erforderlich. Ist dies der Fall, sollten die bereits mit Natronlauge 3 versetzten Substrate 1 und 8 über eine gewisse Zeit ohne die Zusatzsubstrate allein mit der Natronlauge 3 in Verbindung bleiben. Eine Verweilzeit von 10 bis 20 Minuten ist dafür in der Regel ausreichend. Dies kann in dem Zwischenbehälter 15 erfolgen, der hier mit einem Rührwerk 16 ausgerüstet ist, was aber nicht zwingend ist.

Die nicht mit Natronlauge zu versetzenden Zusatzsubstrate werden an dem Zwischenbehälter 15 vorbeigeleitet mit dem Strang 17, und werden dann gemeinsam mit den bereits vorbehandelten Substraten 1 und 8 aufgeheizt bzw. erwärmt. Das nun warme, mit Natronlauge 3 versetzte Substratgemisch 5 gelangt in den ersten Verweilbehälter 61. Insgesamt sind drei baugleiche Verweilbehälter 61, 62, 63 mit jeweils einem Rührwerk 13 vorgesehen. Durch die Rührwerke 13 wird die Ausbildung von "kalten Ecken" vermieden. Die drei Verweilbehälter 61, 62, 63 werden vorteilhaft wechselseitig beschickt und wechseln die Aufgaben jeweils, alternativ als Kaskade wie hier eher dargestellt. Eine Verrohrung für eine wechselseitige Beschickung ist aber leicht vorstellbar. Im ersten Taktzyklus wird Verweilbehälter 61 beschickt. Am Verweilbehälter 62, der bereits beschickt ist, sind sämtliche Zu- und Abläufe geschlossen. Das Substratgemisch 5 verweilt mindestens für die erforderliche Verweilzeit in dem Verweilbehälter 62. Der Verweilbehälter 63 wird in diesem Taktzyklus geleert. Ist die im Verweilbehälter 62 für die Hygienisierung erforderliche Verweilzeit mindestens verstrichen, wechseln die Aufgaben der einzelnen Verweilbehälter. Verweilbehälter 61 ist nun gefüllt, alle Zu- und Abläufe sind geschlossen und das Substratgemisch 5 verbleibt mindestens für die für die Hygienisierung erforderliche Verweilzeit. Das in dem Verweilbehälter 62 befindliche hygienisierte Substratgemisch 5 wird zur weiteren Behandlung abgelassen. Der Verweilbehälter 63 ist mit Beginn dieses Taktzyklus leer und wird nun innerhalb dieses Taktzyklus mit erwärmten und mit Lauge versetztem Substratgemisch 5 gefüllt. Mit Ablauf der erforderlichen Hygienisierungszeit ist dieser Taktzyklus abgeschlossen. Im nächsten Zyklus wird Verweilbehälter 62 gefüllt, der Verweilbehälter 63 verweilt im geschlossenen Zustand über die Verweilzeit und Verweilbehälter 61 wird in dieser Zeit geleert. Nach Verstreichen der für die Hygienisierung erforderlichen Verweilzeit im Verweilbehälter 63 kann der 3er-Zyklus wieder von vorn beginnen.

Sollte nach dem Füllen eines Verweilbehälters 61, 62 oder 63 die für die Hygienisierung und/oder Desintegration erforderliche Temperatur nicht erreicht sein oder nicht gehalten werden, kann der jeweilige Verweilbehälter über eine Zirkulation 12 nachgeheizt werden, hier beispielhaft gezeigt für Verweilbehälter 61. Auch ist es möglich, die Verweilbehälter 61, 62, 63 direkt durch eine gestrichelt dargestellte Dampfinjektion 14 oder sonstige oben genannte Einmischung von Dampf zu beheizen, wobei die Verweilbehälter 61, 62, 63 dann mit einer derartigen Beheizungsmöglichkeit ausgerüstet sein müssen.

Nach der Hygienisierung und Desintegration ist bei dieser Verfahrensvariante die Ablauftemperatur zur Beschickung der meist mesophilen Faulung mit etwas über 70°C zu hoch. Daher ist in diesem Fall eine Kühlung 9 sinnvoll. Eine Kühlung ist in der Regel nicht erforderlich, wenn eine thermophile Faulung auf diesem Temperaturniveau erfolgt bzw. vorgesehen ist. Eine Kühlung kann beispielsweise auch durch ein Substrat oder durch die Gesamtheit der zugeführten Substrate erfolgen, die dadurch im gewissen Umfang vorgeheizt sind.

Es ist gleichfalls möglich, dass der Prozess zur Desintegration und Hygienisierung mittels pH-verändernder Lösung, insbesondere alkalischer Lösung, und Dampfeinmischung bzw. Dampfinjektion auch in einem oder wechselseitig zwei Verweilbehältern erfolgt.

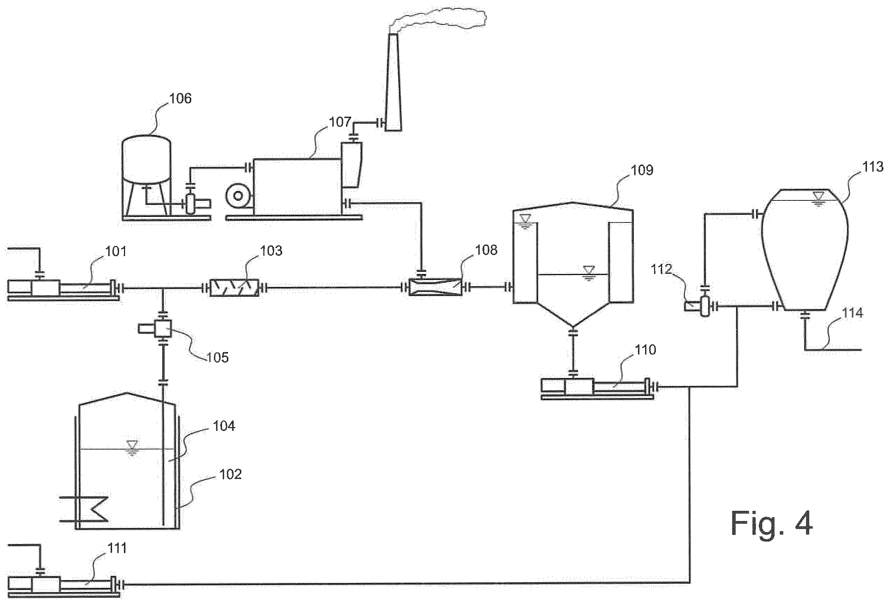

**Fig. 4** zeigt in schematischer Weise eine Anlage zur Vorbehandlung von Schlämmen gemäß dem vorgeschlagenen Verfahren, wobei die Schlämme für eine Faulung vorgesehen sind. Der eingedickte Überschussschlamm wird mittels der Pumpe 101 in das System eingespeist und mit Natronlauge als alkalische pH-verändernde Lösung 102 im Bereich einer Dosierstelle 103 versetzt, wobei hierfür ein Vorratsbehälter 104 für die Natronlauge 102 und eine Dosiereinrichtung 105 vorgesehen ist, beispielsweise eine Dosierpumpe oder ein Dosierventil. Aufbereitetes Speisewasser aus einem Wassertank 106 wird in einem Dampferzeuger 107 in Niederdruck-Sattdampf umgesetzt und in den mit Natronlauge versetzen Schlamm an der Dampfinjektionsstelle 108 injiziert. Der Schlamm wird in den Verweilbehälter 109 weitergeleitet, wobei in dem Verweilbehälter 109 die Inkubation für die Desintegration des organischen Schlamms erfolgt. Nach Ablauf der vorgesehenen Verweilzeit wird der Schlamm aus dem Verweilbehälter 109 mittels der Pumpe 110 abgezogen. In einem nachfolgenden Leitungsabschnitt wird mittels einer weiteren Pumpe 111 kalter Primärschlamm eingespeist und mischt sich mit dem behandelten Überschlussschlamm aus dem Verweilbehälter 109, wodurch der Schlamm auf eine für eine nachfolgende Faulung geeignete Temperatur abgekühlt wird. Mittels der Pumpe 112 wird der Schlamm weiter zur Faulung in den Faulbehälter 113 gepumpt. Die Pumpe 112 ist vorteilhaft eine Zirkulationspumpe an der Faulung, um diese zu durchmischen. Der behandelte Schlamm kann in diese Zirkulation mit eingespeist werden, weil so gleich eine Vermischung in der etwas turbulenteren Strömung und der Zirkulationspumpe erreicht wird. Der ausgefaulte Schlamm verlässt den Faulbehälter 113 über den Auslass 114 und wird zu den nächsten verfahrenstechnischen Schritten, wie beispielsweise Entwässerung oder Phosphorrückgewinnung, gefördert. Bei diesem System bleibt die gesamte Schlammlinie drucklos. Lediglich der Dampfbereich weist einen geringen Überdruck auf, damit der Dampf injiziert werden kann.

Alternativ oder zusätzlich zu dem Dampferzeuger 107 kann die Dampferzeugung über einen Abhitzekessel eines Blockheizkraftwerks realisiert werden. Weiterhin ist es möglich, dass der Dampf alternativ oder zusätzlich zu der Einbringung im Zulauf direkt in den Verweilbehälter 109 eingebracht wird.

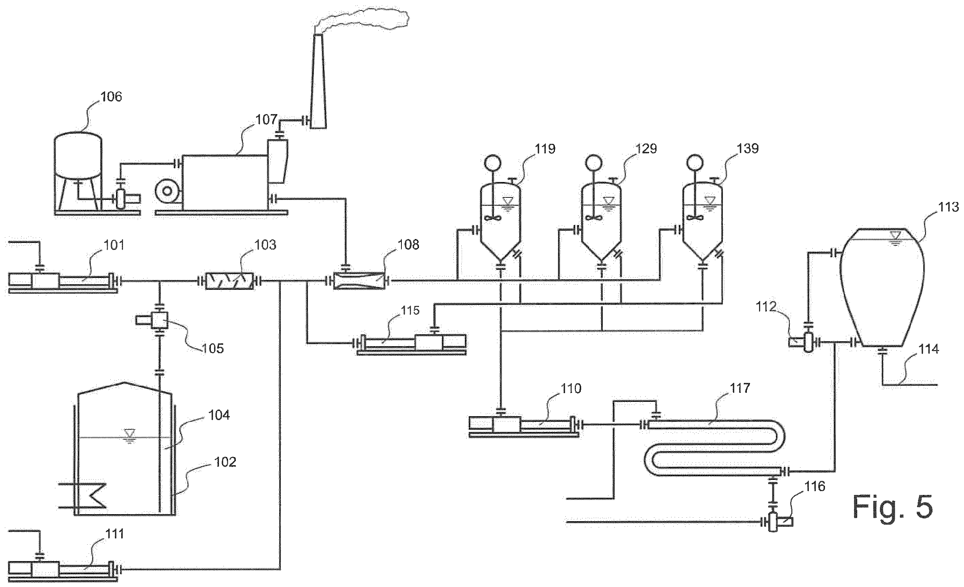

**Fig. 5** zeigt in schematischer Weise eine weitere Anlage zur Vorbehandlung von Schlämmen gemäß dem vorgeschlagenen Verfahren, wobei die Schlämme für eine Faulung vorgesehen sind. In weiten Teilen entspricht diese Anlage der Anlage, die in Fig. 4 illustriert ist. Die sich entsprechenden Elemente sind mit den gleichen Bezugszeichen versehen. Im Unterschied zu der Anlage aus Fig. 4 wird bei dieser Anlage sowohl der Überschussschlamm als auch Primärschlamm einer Behandlung gemäß dem vorgeschlagenen Verfahren unterzogen, sodass die gesetzlichen Anforderungen an eine Hygienisierung für alle Substrate realisiert werden können, die der nachfolgenden Faulung unterzogen werden. Der Primärschlamm wird dabei mittels der Pumpe 111 in das System stromabwärts der Dosierstelle 103 für die Natronlauge eingemischt, sodass der Primärschlamm zusammen mit dem Überschlussschlamm durch die Dampfinjektion an der Dampfinjektionsstelle 108 auf die erforderliche Temperatur erwärmt wird. Auch zur Erfüllung der gesetzlichen Bestimmungen wird die Anlage im Batch-Verfahren gefahren, wobei im Unterschied zu der Anlage aus Fig. 4 drei Verweilbehälter 119, 129, 139 eingesetzt werden, die wechselseitig beschickt werden. Das Volumen der Verweilbehälter 119, 129, 139 wird durch die erforderliche Länge der Verweilzeit bestimmt, wobei die Länge der Verweilzeit von dem erforderlichen Maß der Desintegration der partikulären Komponenten des Schlamms und/oder den gesetzlichen Hygienisierungsanforderungen abhängen kann. Weiterhin ist eine Zirkulationspumpe 115 vorgesehen, mit der der Schlamm aus den Verweilbehältern 119, 129, 139 abgezogen und erneut in den Bereich der Dampfinjektionsstelle 108 eingespeist werden kann. Mit dieser Maßnahme ist ein Nachheizen des Schlamms in den Verweilbehältern 119, 129, 139 möglich, beispielsweise im Hinblick auf das Einhalten der Bestimmungen für die Hygienisierung. Alternativ oder zusätzlich kann eine Dampfinjektion in den Verweilbehältern 119, 129, 139 vorgesehen sein, die hier nicht gezeigt ist. Nach dem Ablauf der Verweilzeit in den jeweiligen Verweilbehältern 119, 129, 139 wird der behandelte Schlamm mittels der Pumpe 110 aus den Verweilbehältern 119, 129, 139 abgezogen und mittels der Pumpe 112 weiter in den Faulbehälter 113 gefördert. Da die Faulung im Faulbehälter 113 oftmals als mesophile Faulung bei ca. 40°C gefahren wird, ist eine Kühlung 117 des behandelten Schlamms erforderlich. Als Kühlmedium wird in dieser Anlage der Kläranlagenablauf genutzt, der über die Pumpe 116 gefördert wird.

Eine Vergleichsrechnung zeigt den unterschiedlichen, energetischen Aufwand zwischen dem in Fig. 5 illustrierten System einer thermisch-chemischen Behandlung mit Dampferwärmung gemäß dem erfindungsgemäßen Verfahren und einer herkömmlichen Thermo-Druckbehandlung an einem Beispiel für 10 m³/h und einer Schlammkonzentration von 15% TS (TS ist Trockensubstanz) im Eintrag. Eine Zusammenfassung einer Vergleichsrechnung kommt selbst bei Annahme der vollständigen Energierückgewinnung über eine Flashverdampfung bei der Thermo-Druckbehandlung zu dem folgenden Ergebnis:

| Stoffstrom | Einheit | Thermisch-chemische Behandlung mit Dampf | Thermo-Druckbehandlung | Vergleich |
|---|---|---|---|---|
| Dampfmenge | kg/h | 921 | 1677 | -756 kg/h |
| Dampfenergie | kW | 630 | 1147 | -517 kW |
| Natronlaugenmenge | l/h | 15 | 0 | +15 l/h |
| Zusätzlicher Kühlwasserbedarf | m³/h | 0 | 39,7 | -39,7 m³/h |
| Zusätzliche Kühlenergie | kW | 0 | 459 | -459 kW |

Insgesamt ist damit das vorgeschlagene Verfahren gegenüber einer Thermo-Druckbehandlung im Hinblick auf die benötigte Dampfmenge und die Dampfenergie sowie im Hinblick auf den Kühlwasserbedarf und die Kühlenergie wesentlich günstiger. Darüber hinaus kann das vorgeschlagene Verfahren mit einfachen, klärwerkstypischen Komponenten als druckloses System bei geringem Wartungsaufwand realisiert werden und bietet darüber hinaus allgemein die Vorteile einer thermisch-chemischen Behandlung, insbesondere eine hohe Steigerung der Gesamtgasproduktion, eine daraus resultierende, deutliche Reduktion der zu entsorgenden Feststoffmenge, einen höheren Feststoffgehalt in der Entwässerung, eine Einsparung an benötigten Polymeren und einer Reduktion der erforderlichen Faulzeit, wobei gleichzeitig durch die Erwärmung mittels Dampfbehandlung die Verarbeitung von hochviskosen Substraten möglich ist, also auch von Schlämmen mit hoher Feststoffkonzentration.

## Patentansprüche

1. Verfahren zur Desintegration von organischen Substraten, **dadurch gekennzeichnet, dass** das Substrat (1) zur Erwärmung auf eine Temperatur unterhalb von 100°C mit Dampf (4; 14) behandelt wird und unter drucklosen Bedingungen einer Verweilzeit unterzogen wird.

2. Verfahren nach Anspruch 1, **dadurch gekennzeichnet, dass** dem Substrat (1) eine pH-verändernde Lösung (3) zugesetzt wird, wobei insbesondere die pH-verändernde Lösung (3) alkalisch ist, vorzugsweise Natronlauge (3), wobei insbesondere 1 I bis 5 I Natronlauge/m³ Substrat zugesetzt werden.

3. Verfahren nach Anspruch 1 oder 2, **dadurch gekennzeichnet, dass** die organischen Substrate (1) Schlämme aus Abwasserbehandlungsanlagen sind oder Substrate, die in eine Biogasanlage eingebracht werden, wobei vorzugsweise der Schlamm (1) einen Feststoffgehalt zwischen 2% bis 20% aufweist, insbesondere zwischen 4% bis 8%.

4. Verfahren nach einem der vorhergehenden Ansprüche, **dadurch gekennzeichnet, dass** der Dampf (4; 14) Sattdampf ist, insbesondere Niederdruck-Sattdampf.

5. Verfahren nach einem der vorhergehenden Ansprüche, **dadurch gekennzeichnet, dass** das Substrat (1) auf eine Temperatur zwischen 40°C und 95°C, insbesondere zwischen 70°C und 75°C, vorzugsweise 72°C, erwärmt wird.

6. Verfahren nach einem der vorhergehenden Ansprüche, **dadurch gekennzeichnet, dass** eine Verweilzeit zwischen 0,5 h und 3 h vorgesehen ist.

7. Verfahren nach einem der vorhergehenden Ansprüche, **dadurch gekennzeichnet, dass** während der Verweilzeit eine Durchmischung des Substrats erfolgt bzw. vorgesehen ist.

8. Verfahren nach einem der vorhergehenden Ansprüche, **dadurch gekennzeichnet, dass** das Verfahren im Batch-Betrieb durchgeführt wird.

9. Verfahren nach einem der vorhergehenden Ansprüche, **dadurch gekennzeichnet, dass** sich das Substrat während der Verweilzeit in wenigstens einem Verweilbehälter (6; 61, 62, 63; 109; 119, 129, 139) befindet, wobei insbesondere zwei oder mehr Verweilbehälter (6; 61, 62, 63; 119, 129, 139), vorzugsweise drei Verweilbehälter, vorgesehen sind, wobei die zwei oder mehr Verweilbehälter wechselseitig mit dem Substrat beschickt werden.

10. Verfahren nach einem der vorhergehenden Ansprüche, **dadurch gekennzeichnet, dass** vor der Behandlung des Substrats (1) mit Dampf (4; 14) eine Vorerwärmung des Substrats durch den Rückfluss eines bereits erwärmten Substratvolumens erfolgt bzw. vorgesehen ist.

11. Verfahren nach einem der vorhergehenden Ansprüche, **dadurch gekennzeichnet, dass** während der Verweilzeit eine Nacherwärmung des Substrats erfolgt bzw. vorgesehen ist.

12. Verfahren nach einem der vorhergehenden Ansprüche, **dadurch gekennzeichnet, dass** das Substrat nach der Verweilzeit einer Faulung (2) unterzogen wird.

13. Verfahren nach einem der vorhergehenden Ansprüche, **dadurch gekennzeichnet, dass** nach der Verweilzeit eine zumindest teilweise Kühlung (9; 117) des Substrats erfolgt bzw. vorgesehen ist.

14. Vorrichtung zur Durchführung eines Verfahrens nach einem der vorhergehenden Ansprüche mit wenigstens einer Einrichtung (108) zur Behandlung des Substrats mit Dampf (4) und mit wenigstens einem Verweilbehälter (6; 61, 62, 63; 109; 119, 129, 139), der für eine Verweilzeit des mit Dampf behandelten Substrats vorgesehen ist, wobei sie vorzugsweise wenigstens eine Dosiereinrichtung (105) für eine pH-verändernde Lösung (102) nach Anspruch 2 aufweist, wobei insbesondere der Verweilbehälter (6; 61, 62, 63; 109; 119, 129, 139) für eine Verweilzeit des mit pH-verändernder Lösung versetzen und mit Dampf behandelten Substrats ausgebildet ist.

15. Vorrichtung nach Anspruch 14, **dadurch gekennzeichnet, dass** für die Behandlung des Substrats mit Dampf (4; 14) wenigstens eine Einrichtung zur Einmischung von Dampf, vorzugsweise eine Dampfinjektionseinrichtung (108) oder eine Einrichtung zur Dampfeinmischung, vorgesehen ist, die in einen Zulauf des Verweilbehälters (119, 129, 139) und/oder in den wenigstens einen Verweilbehälter mündet, wobei insbesondere wenigstens eine Pumpe (115) für eine zirkulierende Rückführung von Substrat aus dem Verweilbehälter (119, 129, 139) zur Mündungsstelle der Einrichtung zur Einmischung von Dampf vorgesehen ist.
